# EUROPEAN PATENT APPLICATION

(11) **EP 1 115 116 A1**
(43) Date of publication of application: **11.07.2001**
(21) Application number: 00929799.5
(22) Date of filing: 19.05.2000
(51) Int. Cl.: G11B 25/04

(54) **HARD DISC DRIVE**

(30) Priority: 19.05.1999 JP 13857699; 07.10.1999 JP 28668299
(71) Applicant: Sumitomo Electric Industries, Ltd., Osaka-shi, Osaka 541-0041 (JP)
(72) Inventor: KOMURA, Osamu Itami Works of Sumitomo Elec.Ind.Ltd, Hyogo 664-0016 (JP); OTSUKI, Makoto Itami Works Sumitomo Elec.Ind.Ltd., Hyogo 664-0016 (JP); MURABE, Kaoru Itami Works of Sumitomo Elec.Ind.Ltd, Hyogo 664-0016 (JP)
(74) Representative: Cross, Rupert Edward Blount
(86) International application number: JP0003213
(87) International publication number: WO0124183

(57) **Abstract**

(57) Abstract: An HDD in which the frictional resistance does not increase even if the rotational speed of the storage medium increases and stable operation even against humidity variation and temperature variation is possible. HDD constituent elements (4,5) are accommodated in a closed case (3) that is isolated from the outside atmosphere. The atmosphere inside the case (3) is kept at low humidity, that is the water vapor pressure is about 0.1 atmospheric pressure or less, preferably about 0.005 atmospheric pressure or less. When the atmospheric pressure is 1, Alternatively, the air is replaced a gas such as a nitrogen gas that contains no humidity and exhibits low frictional resistance Further altematively the pressure of the air inside the case (3) is reduced to about 0.9 to 0.5 atmospheric pressure, preferably 0,7 atmospheric pressure, to lower the air resistance. Undcr this reduced pressure, a case (3) made of a thick or high-rigidity material is used. The case has an element which can be anything capable of following or dinary variations of the atmospheric pressure and temperature, for example, an element comprising an expandable member (10) such as bellows and deformable with a variation of the atmospheric pressure.

## Description

### FIELD OF THE INVENTION

The present invention relates to a hard disk drive for use as a storage device for computers.

### BACKGROUND OF THE INVENTION

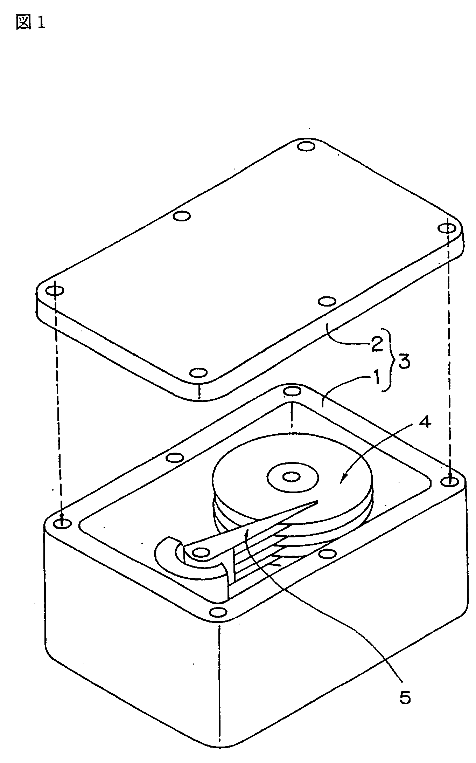

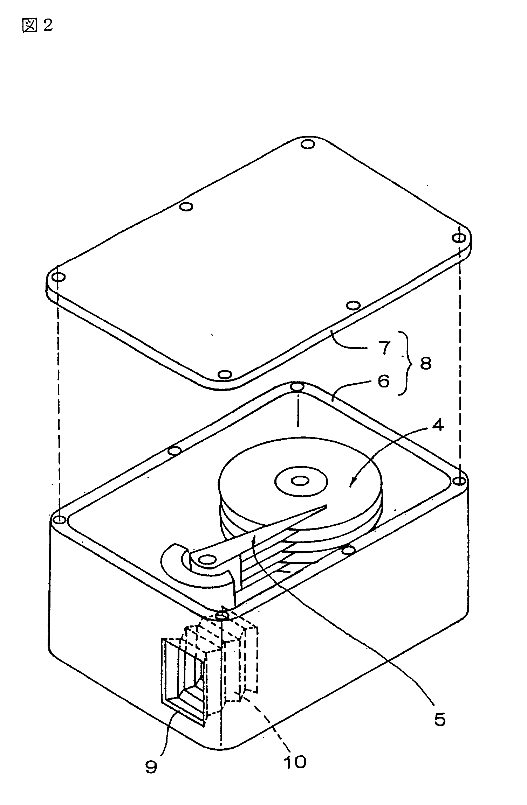

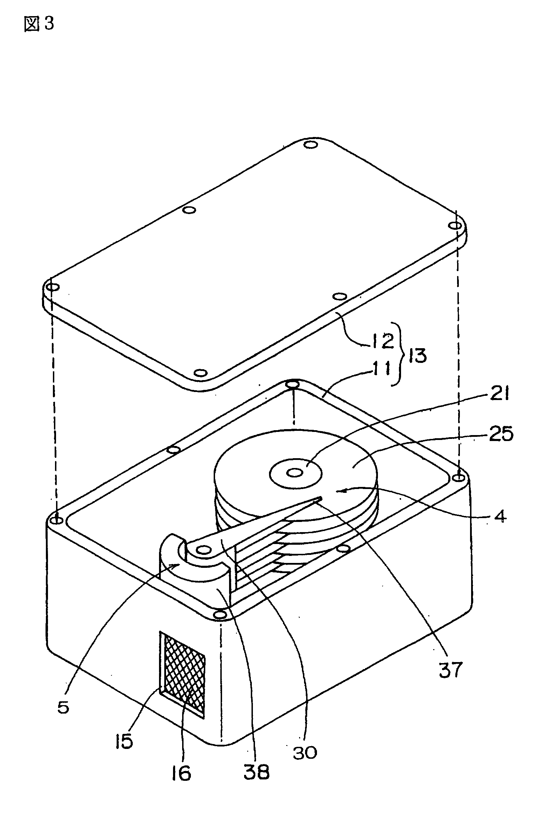

A conventional hard disk drive (hereinafter referred to as an "HDD") is schematically illustrated in Fig. 3. In the drawing, the HDD having a disk section 4 and a head section 5 as major parts is stored in a casing 13 made of a housing 11 and a cover 12. The disk section 4 includes a spindle motor 21 capable of rotating at a high speed of around 10,000 rpm and a plurality of storage media 25 mounted on the spindle motor 21, each having information recording surfaces. The head section 5 includes a plurality of head assemblies 37 each capable of accessing the information storage surfaces of the corresponding storage media 25 being rotated at a high speed for recording information into the media and/or retrieve the recorded information therefrom, a carriage 30 which supports the head assemblies 37, and a head mount 38 which provides a pivotal operation of the carriage 30 to enable the head assemblies 37 to access a designated location of each of storage media 25.

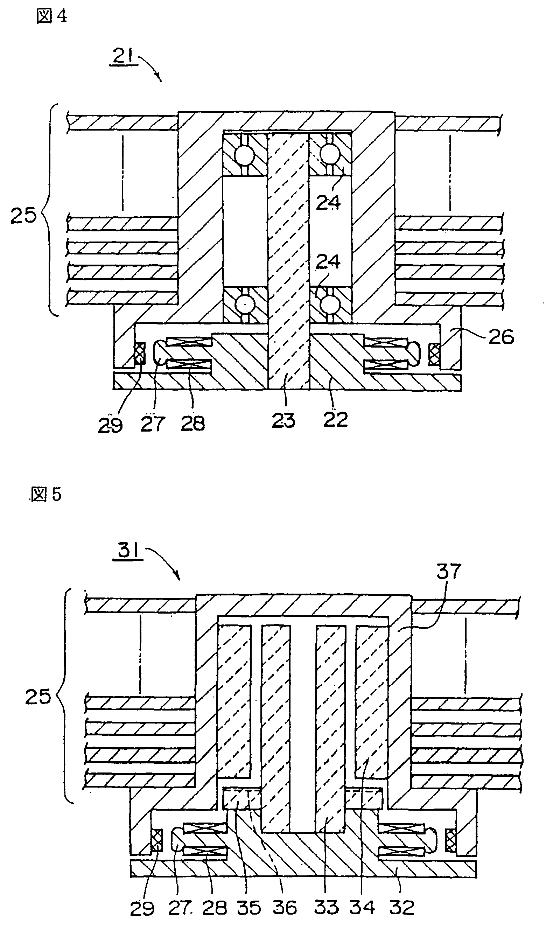

Fig. 4 is a cross-sectional view showing a spindle motor 21 having storage media 25 and forming the disk section 4 of the HDD described above. In this drawing, a base 22 has a shaft 23 fixed thereto. The shaft 23 supports ball bearings 24 fixedly fitted thereto. A rotor hub 26 is mounted for rotation on outer peripheries of the ball bearings 24. The rotor hub 26 supports the storage media 25 in a parallel fashion to a plane extending perpendicular to a longitudinal axis of the shaft 23 and leaving a certain gap therebetween so that information can be recorded on and retrieved from the information recording surfaces of each storage medium 25. Fixed to the housing 22 are stators 27, each of which stators being wound with a coil 28 and opposed to a rotor magnet 29 secured on an inner peripheral surface of the rotor hub 26.

In operation of the spindle motor 21 so constructed, an electric current is applied to the coils 28. This generates repellent and attraction forces between the stators 27 and the rotor magnet 29, rotating the rotor hub 26 around the shaft 23 through the ball bearing 24. As a result, the storage media 25 mounted on the rotor hub 26 are rotated. The rotating storage media 25 can be accessed by the head assemblies 37 (see Fig. 3), allowing the head assemblies 37 to retrieve information from the storage media 25 and to record information on the storage media 25 as required.

For the above-described spindle motor 21, the recent requirement of the compact and high-speed memory device with an enlarged storage capacity brings an attention to the use of spindle motor with a hydrodynamic bearing capable of realizing an accurate and high-speed rotation and, in particular, with a hydrodynamic gas bearing without an excessive heat generation even at the high-speed rotation and easy to be handled.

Fig. 5 is a cross-sectional view, showing a spindle motor 31 with such hydrodynamic gas bearing. In this drawing, a base 32 includes a cylindrical shaft 33 fixed thereto. The shaft 33 is positioned in a hollow cylindrical sleeve 34 so that a certain gap is defined between the shaft 33 and the sleeve 34. The shaft 33 and the sleeve 34 define a radial bearing. A thrust plate 35 is mounted around and perpendicular to the shaft 33 so that it opposes to one axial end surface of the sleeve 34. In this manner, a thrust bearing is formed by the one end surface of the sleeve 34 and the thrust plate 35. A surface of the thrust plate 35, opposing the end surface of the sleeve 34 has grooves 36 formed therein and indicated by dotted lines for the generation of a thrust hydrodynamic force. The sleeve 34 fixedly supports on its outer periphery a rotor hub 37 which bears a plurality of storage media 25. Other arrangements are similar to those shown in Fig.4 and therefore like reference numerals are provided for like parts.

In operation of the spindle motor 31 so constructed, with the hydrodynamic gas bearing, an electric current is applied to the coils 28. This causes repellent and attraction forces between the stators 27 and the rotor magnet 29, generating a rotating force of the rotor hub 37. With this force, the sleeve 34 fixing the rotor hub 37 around its periphery rotates around the shaft 33, generating a hydrodynamic force at the radial bearing which maintains the shaft 33 out of contact with the sleeve 34. Also, a relative rotation between the end surface of the sleeve 34 and the thrust plate 35 causes another hydrodynamic force due to the existence of the grooves 36 at the thrust bearing, floating the sleeve 34 above the thrust plate 35. This maintains the rotating members including sleeve 34, rotor hub 37, and storage media 25 out of contact with the fixed members including shaft 33, ensuring a high-speed rotation.

Referring back to Fig. 3, the head assemblies 37 of the head section 5 are each inserted between the neighboring information media 25 in the disk section 4 being rotated with a high speed by the spindle motor 21 or 31 with the structure described above. Each of the inserted head assemblies 37 accesses each information storage surface of the information media 25 by its pivotal movement for writing and/or reading of the information.

The disk section 4 and the head section 5 are received in the housing 11 shown in Fig. 3. A cover 12 is mounted on the housing 11 and then fixed with screws. In this manner, the HDD is entirely housed in the casing 13 made of the housing 11 and the cover 12. An interior of the casing 13 is fluidly communicated to the atmosphere through an opening 15. The opening 15 is provided with a mesh 16 to prevent an invasion of dust, protecting precision machine components including the spindle motor 21.

The conventional HDD so constructed, however, includes several problems. For example, the recent requirement of the increased storage capacity and the resultant rotational speed of the spindle motor as well as the storage media mounted thereto tend to increase an air resistance or windage loss acting on the rotating members including storage media. In particular, in a range of 10,000rpm or more, the increased driving torque further results in an increase of power consumption, noises, and heat caused by the frictional contact with air and the resultant heat increase in the HDD casing.

Also, for the spindle motor for HDD with the hydrodynamic gas bearing, the interior of the casing is communicated with the atmosphere through the mesh. Then, the increase of the humidity or the rapid change in the temperature may cause a dew due to the condensation of air at the radial bearing and/or thrust bearing. The condensed dew may fail to energize the spindle motor or result in an unsteady rotation of the spindle motor, because the bearing members forming the bearings contact with each other when rotation halts, and because only a small gap of about several microns is defined between the bearing members even at the rotation.

Further, in combination with a reduced atmospheric pressure, the communication between the interior and exterior of the casing in the spindle motor with the hydrodynamic bearing may result in a condition where a sufficient dynamic force fails to be generated at the bearing portion. This further results in the contacts of the bearing members, causing a failure of rotation or causing the increase of the rotational number at which the floating state begins and the resultant wear and seizure of the bearing.

### SUMMARY OF THE INVENTION

Accordingly, an object of the present invention is to provide an HDD suitable for high-speed rotation, by resolving above drawbacks such as torque and power consumption increase attributed to friction with the air, wind noises, and heat generation involved therewith when the storage media of the HDD rotates at a high-speed.

It is also an object of the present invention to provide an HDD having stable initiation and rotation properties with no dew condensation due to humidity and temperature changes even when a hydrodynamic gas bearing is employed in a spindle motor for driving the HDD. It is yet another object of the present invention to provide a highly reliable HDD having a hydrodynamic gas bearing in a spindle motor for driving the HDD, which performs stable rotation even when the environment is in decompressed condition.

The present invention resolves the problems described above by sealing the casing storing an HDD, and isolating the same from the exterior environment, and preferably by decompressing, by dehumidifying, and/or by substituting the atmosphere interior of the storage casing. More specifically, the present invention includes the following.

One aspect of the present invention relates to an HDD, comprising: a disk section having storage media driven by a spindle motor; and a head section which accesses the storage media; wherein components composing the HDD are housed in a closed casing so that the components are isolated from the atmosphere during an operation of the HDD. The HDD components are isolated so as to eliminate influences from outer environment for achieving stable operation.

Another aspect of the present invention relates to an HDD, comprising: a disk section having storage media driven by a spindle motor; and a head section which accesses the storage media; wherein at least the spindle motor is housed in a closed casing so that the spindle motor is isolated from the atmosphere during an operation of the HDD. The spindle motor, which is a main component of the HDD, is blocked from outer environment.

Yet another aspect of the present invention relates to an HDD, wherein an interior of the closed casing that is isolated from the atmosphere is decompressed. Decompression is made for the purpose of decreasing friction force with an air.

Yet another aspect of the present invention relates to an HDD, wherein a pressure of the decompressed interior of the closed casing ranges from about 0.9 atm. to about 0.5 atm..

Yet another aspect of the present invention relates to an HDD, wherein the pressure in the decompressed interior of the closed casing is about 0.7 atm..

Yet another aspect of the present invention relates to an HDD, wherein another gas is substituted for air in the interior of the closed casing that is sealed and then isolated from the atmosphere. Substituting another gas for the air is made for the purpose of obtaining an environment suitable for driving the HDD.

Yet another aspect of the present invention relates to an HDD, wherein the gas substituted for the air is an inert gas.

Yet another aspect of the present invention relates to an HDD, wherein the gas substituted for the air is a gas with a reduced friction resistance.

Yet another aspect of the present invention relates to an HDD, wherein the gas substituted for the air is a nitrogen gas. The nitrogen gas is inactive, with low frictional resistance, easy to obtain, and provides an atmosphere suitable for driving the HDD.

Still another aspect of the present invention relates to an HDD, wherein the air or the gas filled in the closed casing for isolating the interior of the housing from the atmosphere is dehumidified. Dehumidification is made for the purpose of eliminating negative influences and adverse effects against precision machine components caused by dew condensation.

Still another aspect of the present invention relates to an HDD, wherein a vapor pressure contained in the dehumidified air or gas in the closed casing is about 0.1 atm. or less when the atmospheric pressure is 1 atm..

Still another aspect of the present invention relates to an HDD, wherein a vapor pressure contained in the dehumidified air or gas in the closed casing is about 0.05 atm. or less, preferably about 0.005 atm. or less when the atmospheric pressure is 1 atm..

Still another aspect of the present invention relates to an HDD, wherein at least a part of the casing isolating the air is made from an elastic member. The elastic member is used to adjust pressure in the interior of the HDD storage casing against pressure in the exterior thereof for shielding the exterior air while reducing a requirement of strength the HDD casing.

Still another aspect of the present invention relates to an HDD, wherein the elastic material member is a bellows.

Still another aspect of the present invention relates to an HDD, wherein the elastic member is a plate made of an elastic material.

Still another aspect of the present invention relates to an HDD, wherein the spindle motor of the HDD has a hydrodynamic gas bearing.

Still another aspect of the present invention relates to an HDD, wherein among components of the hydrodynamic gas bearing, at least either one of components in contact with each other when the spindle motor is de-energized is made of ceramics. Ceramics which has excellent wear resistance is used for improving durability of the bearing especially when it is used in decompressed state.

Another aspect of the present invention relates to a method for driving an HDD, comprising the step of: driving storage media using a spindle motor, wherein among components of the HDD, at least the spindle motor operates within an environment isolated from the atmosphere.

Still another aspect of the present invention relates to a method for driving an HDD, wherein the isolated environment is either decompressed, dehumidified, dust-free, containing a gas substituted for air, or any combination thereof.

According to the HDD in the present invention, problems including increase of power consumption, noises, and heat attributed to the friction can be resolved by providing a decompressed atmosphere in the interior of the closed HDD casing, thereby decreasing friction force with the air at a high-speed rotating sections.

In addition, providing a dehumidified atmosphere in the interior of the closed HDD casing may solve a rotation failure and a initiation failure attributed to dew condensation in case a hydrodynamic gas bearing is used in the spindle motor for driving the HDD.

Furthermore, providing a specifically selected atmosphere in the interior of the closed HDD casing may further decrease friction force at the rotating sections, prevent dew condensation at the hydrodynamic gas bearing, and/or prevent HDD components from deterioration, which may lead to increase durability of the HDD.

A sealing structure for isolating the HDD storage casing from the exterior air still ensures reliable HDD functions even when the exterior air becomes decompressed state, since the interior of the closed HDD storage casing is filled with a gas with specified atmospheric pressure, which enables supply of gas necessary for generating hydrodynamic pressure to the hydrodynamic bearing in the spindle motor.

According to the present invention in which at least a part of the HDD casing is composed of a component deformable with the exterior air pressure change, the pressure in the interior of the closed casing can be adjusted against the pressure in the exterior thereof. And if the exterior pressure or the exterior temperature changes in a certain range, dew condensation in the interior of the casing is prevented, since the interior of the closed casing is isolated from the outside air. Further, deformation of the casing due to a pressure difference between the interior and the exterior can be avoided without employing a storage casing having a high rigidity.

### BRIEF DESCRIPTION OF THE DRAWINGS

Fig. 1 is a perspective view showing an HDD storage casing in one embodiment according to the present invention;
Fig. 2 is a perspective view showing an HDD storage casing in another embodiment according to the present invention;
Fig. 3 is a perspective view showing a conventional HDD storage casing;
Fig. 4 is a cross-sectional view showing a spindle motor to drive storage media of a conventional HDD; and
Fig. 5 is a cross-sectional view showing another spindle motor to drive storage media of a conventional HDD.

### DETAILED DESCRIPTION OF THE PREFERRED EMBODIMENTS

With reference to the drawings, descriptions will now be made to a hard disc drive (HDD) according to the first embodiment of the present invention. Fig. 1 illustrates the HDD of this embodiment. In this drawing, a housing 1 and a cover 2 for covering the housing 1 constitute a casing 3 for receiving the HDD. The housing 1 includes no opening that is defined in the conventional housing for communication between the interior and exterior of the housing. The whole storage casing 3 is made of materials having strength and thickness sufficient to endure a pressure difference between the interior and exterior of the casing. The pressure difference may be predetermined according to a purpose of usage. During the operation of the HDD, the cover 2 is tightly fixed to the housing 1, so that the interior of the storage casing 3 is sealed from the atmosphere. The components of a disk section 4 and a head section 5 of the HDD to be received in the storage casing 3 are similar to those of the conventional ones described above.

With the arrangement, the interior of the closed storage casing 3 of the HDD so sealed is decompressed to decrease a friction resistance with the air. The decompression is easily implemented by, for example, forming a through-hole in the cover 2 of the storage casing 3 in advance, fixing the cover 2 to the housing 1, sealing the storage casing 3, then connecting a vacuum pump to the through-hole for decompression, and finally blocking the through-hole. A degree of decompression can be selected by the requirements determined by, for example, the rotational frequency of the HDD. When assuming that the atmospheric pressure is "1 atm.", the decompression may be achieved to about 0.9 atm. to 0.5 atm.. More decompression may be conducted as required. Experiments conducted by the inventors has shown that the decompression to about 0.7 atm. improves the power consumption, noises, and heat.

One of problems that should be solved for the decompression of the interior of the storage casing 3 is the strength of the storage casing 3 for enduring the reduced pressure caused by the decompression. This can be achieved by the selection of material, increase of the thickness, or change of design such as an addition of reinforcing ribs of the storage casing 3. The deformation of the closed storage casing 3 due to the insufficient strength affects the performance of the HDD. Then, the storage casing 3 should be given sufficient rigidity according to a required level of decompression. Another problem to be solved is degradation of a floating property of rotating components of the hydrodynamic gas bearing in the spindle motor, caused by decompression of the interior of the closed storage casing 3. This may result in that the decompression increases a rotational speed at the time of initiation of floating, which promotes wear or seizure of the bearing section, or decreases a resistance against external fluctuation. Accordingly, an excessive decompression should be avoided in the closed casing in which a hydrodynamic pressure bearing is used for the bearing section of the HDD. Experiments conducted by the inventors indicated that decompression to the range of 0.7 atm. did not cause such a problem even where the hydrodynamic pressure bearing was used. To avoid wear and unlikely seizure of the bearing section, it is preferable that at least either one of components, preferably both components, in contact with each other when the hydrodynamic bearing is out of operation, is made of ceramics with a high abrasion resistance.

One of the advantages obtained by sealing the closed storage casing 3 of the HDD is that the interior of the casing is maintained at a certain atmospheric pressure even when its interior or exterior is decompressed, in particular, its exterior is vacuumed. This means that, even for the spindle motor with the hydrodynamic gas bearing, gas required for the generation of the dynamic force is reserved, which ensures the functions of the HDD. Also, the sealed interior without any dust prevents the malfunctions failures of precision machine components which would otherwise be caused by the dust.

Descriptions will now be made to the HDD in the second embodiment of the present invention. In the spindle motor for HDD with the hydrodynamic gas bearing, air in the bearing is compressed by the relative movement of the bearing members, which can result in a dew condensation. Also, a decrease in the atmospheric temperature down to, for example, around 0°C after the sealing of the closed storage casing 3 may reduce the moisture pressure of the air sealingly contained in the storage casing 3 to result in the dew condensation. The dew condensation causes no serious problems in the spindle motor with the ball bearing shown in Fig. 4. However, the spindle motor with the hydrodynamic gas bearing shown in Fig. 5 may suffer from negative influences such as a difficulty of restart of the spindle motor.

In order to avoid the negative influences, the HDD in this embodiment is sealingly contained in the closed storage casing 3 as shown in Fig. 1. Moisture content of the air in the interior of the closed storage casing is reduced and, preferably, decompressed in advance. A reduction of the moisture content can be implemented by such step as transmitting the air through a dehumidifier and then sealing the air in the closed storage casing 3. A degree of dehumidification should be determined to prevent the generation of dew condensation at the bearing section, which will vary with the working conditions of the spindle motor. Generally, on the assumption that the outside temperature when using the HDD would drop to as low as 0°C, it is preferable that vapor pressure ranges below about 0.1 atm. when the atmospheric pressure is 1 atm. before the sealing of the storage casing 3. In order to prevent the generation of dew condensation or rust in the precision machine components, it is preferable to reduce the moisture as small as possible. For this purpose, the vapor pressure is preferably adjusted to about 0.05 atm. or lower, more preferably about 0.005 atm. or lower. It can be said that it is preferable to enclose the dried air of which vapor pressure is 50% or less of the saturated vapor pressure within a possible range of temperature in use.

Descriptions will now be made to an HDD in the third embodiment according to the present invention. In this embodiment, another gas is contained in the closed storage casing 3 in place of air. The gas to be selected has, for example, low viscosity and generates a lower frictional force at the rotation of the spindle motor. This results in an effect of decreasing the frictional force generated in the HDD. The decompression of gas as with the first embodiment provides further improvements. The substitution of the gas for air reduces the frictional force generated in the rotation. In addition, for the spindle motor with the hydrodynamic gas bearing, the reduction of moisture content by the dehumidification as the second embodiment or the substitution of dehumidified gas will prevent the dew condensation at the bearing section. Further, the inert gas capable of preventing the deterioration of the components of HDD contained in the closed storage casing increases a durability of HDD.

A nitrogen gas is preferably used for the gas, which satisfies either requirement mentioned above and is available at low cost. It will be understood, however, that the present invention is not limited to the embodiment disclosed, but is capable of using other inert gases such as argon and helium, or any other gases which contain no humidity, and do not affect the storage components.

Descriptions will now be made to an HDD in the forth embodiment according to the present invention with reference to drawings. Fig. 2 illustrates an HDD in this embodiment. In the drawing, a storage casing 8 for storing an HDD is defined by a housing 6 and a cover 7 which covers the housing 6. During operation of the HDD, the cover 7 is tightly fixed to the housing 6 so that the storage casing 8 is closed to seal the interior of the storage casing 8 from the atmosphere. In the HDD in this embodiment, the housing 6 is provided with an opening 9. The opening 9 is equipped with a bellows-shaped elastic shielding section 10 so that, by the storage casing 8 itself and the shielding section 10, the interior of the closed storage casing 8 is isolated from the atmosphere. The components of HDD stored in the closed storage casing 8 in the Fig. 2 are the same as those shown in Fig. 1.

In the HDD according to the first to third embodiments described above, the closed storage casing 13 is completely sealed. This ensures the advantage of securing a function of the hydrodynamic gas bearing in the closed casing even in a high decompression state. Then, if there is a large difference in pressure between the interior and the exterior of the closed casing, it is necessary to provide both housing 11 and cover 12 of the casing 13 with an appropriate rigidity to prevent the deformation of the storage casing 13 due to the pressure difference and to prevent negative influences which might otherwise be caused on the internal equipment. This requires to use materials with increased thickness and rigidity, which results in an increase of the size and weight of HDD.

In comparison thereto, the HDD according to this embodiment, the bellows-shaped shielding section 10 equipped thereto deforms in accordance with a change of the atmospheric pressure, which allows the pressure in the closed storage casing 8 to follow the atmospheric pressure change to a certain extent. This in turn decreases the pressure difference between the interior and exterior of the closed storage casing 8 and then minimizes the deformation of the storage casing 8 caused by the pressure difference. In this manner, with the arrangement, the deformation that may affect the internal devices can be avoided without any need to increase the rigidity of the structural components of the casing. In addition, the structure decreases the frictional force generated during the operation of HDD, which is one of the objects of the present invention, as well as prevents the dew condensation at the bearing section.

The bellows may be formed from a corrugated film bag made of material such as phosphor bronze, beryllium copper, and stainless steel, used as typical machine parts. The size and shape of the bellows can be chosen according to desired pressure differences.

In this embodiment, a bellows-shaped member used in the elastic shielding section 10 may be made of another member having an elasticity capable of deforming in accordance with the pressure difference between the interior and exterior of the closed casing. For example, alternatively an elastic film plate made of rubber or plastic, for example, may be attached to close the opening 9. In particular, the entire storage casing 8 may be made of such elastic material to absorb the pressure difference between the interior and exterior by the deformation of walls of the casing.

Also in this embodiment, as with the previous embodiments, preferably the gas contained in the closed storage casing 8 is an atmosphere with a decreased moisture pressure, or an inert gas.

Every embodiment described above discloses means for enclosing the entire HDD including a disk section and head section in a closed storage casing and then isolating the same from the atmosphere.

Also, it is sufficient that at least the hydrodynamic bearing section of the spindle motor is sealingly enclosed in the suitable atmosphere and then isolated from the external atmosphere, provided that the dew condensation that might be caused in the operation of the hydrodynamic bearing is prevented or the sufficient dynamic force is generated even at the reduced pressure, which is one of the objects of the present invention. As a result, dew condensation at the hydrodynamic bearing section is prevented, and hydrodynamic pressure is generated in a decompression state if appropriate pressure-resistant structure is provided. Specifically, it is possible to isolate only the spindle motor 31 as shown in Fig. 5 from the atmosphere and dispose the same in the environment which does not cause dew condensation, or in the environment that allows the generation of the dynamic pressure and is surrounded by an evacuated atmosphere, and to provide a mechanism to extract the rotational force for the rotation of the disks.

Descriptions will now be made to an HDD in the fifth embodiment of the present invention. This embodiment relates to a method for driving the HDD having a disk section which is driven by a spindle motor and a head section, in which at least the spindle motor operates within an atmosphere separated from the outside air and sealed. Specifically, among components of the HDD, at least the spindle motor, preferably the entire HDD, is sealed in a closed casing and operated to enable stable use of the HDD without being affected by changes in atmospheric pressure and humidity of the outside air or affected by harmful gases present in the environment, especially when the spindle motor has a hydrodynamic gas bearing. Sealing a dust-free gas can improve durability and reliability of the hydrodynamic gas bearing which is especially susceptible to dust. In addition, as disclosed in the description of each embodiment above, the sealed atmosphere is either one of a decompressed atmosphere, a dehumidified atmosphere, an atmosphere made of another gas with, e.g., low friction resistance substituted for the air, or any combination thereof to realize stable driving of the HDD which rotates at high-speed with small energy.

### TESTS

### <Test 1>

In order to verify the effects of the present invention, an operation of a conventional HDD located in the atmosphere was compared with that of a completely sealed HDD according to the first embodiment of the present invention. As a result of operating both HDDs in a thermostatic chamber at a temperature of 35°C and a humidity of 95%, the conventional HDD came to a halt while the HDD of the present invention continued normal operation.

### <Test 2>

A comparison was made between two completely sealed HDD storage casings with a rubber plate and a bellows, respectively, attached to the side of each HDD storage casing according to the fourth embodiment of the present invention and a conventional thin storage casing with the same thickness without such pressure regulating mechanism. Operation was conducted under the conditions that the closed HDD storage casing having 1 atmospheric pressure inside and 0.7 atmospheric pressure outside, and the storage casing was made of aluminum with a thickness of 1 mm (except screw hole areas) . As a result of the test, the storage casing without a pressure regulating mechanism generated a disk write error due to deformation of the storage casing, whereas the storage casing with a pressure regulating mechanism according to the present invention did not generate any error. This verifies that the pressure regulating mechanism according to the present invention allows the closed casing with a small thickness to endure deformation involved with a change in atmospheric pressure.

## Claims

1. A hard disk drive, comprising:
a disk section having storage media driven by a spindle motor; and
a head section which accesses the storage media;
wherein components composing the hard disk drive are housed in a closed casing so that the components are isolated from the atmosphere during an operation of the hard disk drive.

2. A hard disk drive, comprising:
a disk section having storage media driven by a spindle motor; and
a head section which accesses the storage media;
wherein at least the spindle motor is housed in a closed casing so that the spindle motor is isolated from the atmosphere during an operation of the hard disk drive.

3. A hard disk drive as defined in any one of claims 1 and 2, wherein an interior of the closed casing that is isolated from the atmosphere is decompressed.

4. A hard disk drive as defined in claim 3, wherein a pressure of the decompressed interior of the closed casing ranges from about 0.9 atm. to about 0.5 atm..

5. A hard disk drive as defined in claim 3, wherein the pressure in the decompressed interior of the closed casing is about 0.7 atm..

6. A hard disk drive as defined in any one of claims 1 to 5, wherein another gas is substituted for air in the interior of the closed casing that is sealed and then isolated from the atmosphere.

7. A hard disk drive as defined in claim 6, wherein the gas substituted for the air is an inert gas.

8. A hard disk drive as defined in claim 6, wherein the gas substituted for the air is a gas with a reduced friction resistance.

9. A hard disk drive as defined in claim 7, wherein the gas substituted for the air is a nitrogen gas.

10. A hard disk drive as defined in any one of claims 1 to 9, wherein the air or the gas filled in the closed casing for isolating the interior of the housing from the atmosphere is dehumidified.

11. A hard disk drive as defined in claim 10, wherein a vapor pressure contained in the dehumidified air or gas in the closed casing is about 0.1 atm. or less when the atmospheric pressure is 1 atm..

12. A hard disk drive as defined in claim 10, wherein a vapor pressure contained in the dehumidified air or gas in the closed casing is about 0.05 atm. or less, preferably about 0.005 atm. or less when the atmospheric pressure is 1 atm..

13. A hard disk drive as defined in any one of claims 1 to 12, wherein at least a part of the closed casing isolating the air is made from an elastic member.

14. A hard disk drive as defined in claim 13, wherein the elastic material member is a bellows.

15. A hard disk drive as defined in claim 13, wherein the elastic member is a plate made of an elastic material.

16. A hard disk drive as defined in any one of claims 1 to 15, wherein the spindle motor of the hard disk drive has a hydrodynamic gas bearing.

17. A hard disk drive as defined in claim 16, wherein among components of the hydrodynamic gas bearing, at least either one of components in contact with each other when the spindle motor is de-energized is made of ceramics.

18. A method for driving a hard disk drive, comprising the step of:
driving storage media using a spindle motor, wherein among components of the hard disk drive, at least the spindle motor operates within an environment isolated from the atmosphere.

19. A method for driving a hard disk drive as defined in claim 18, wherein the isolated environment is either decompressed, dehumidified, dust-free, containing a gas substituted for air, or any combination thereof.

1. A hard disk drive, comprising:
a disk section having storage media driven by a spindle motor; and
a head section which accesses the storage media;
wherein components providing the hard disk drive are housed in a closed casing so that the components are isolated from the atmosphere during operation of the hard disk drive.

2. A hard disk drive, comprising:
a disk section having storage media driven by a spindle motor; and
a head section which accesses the storage media;
wherein at least the spindle motor is housed in a closed casing so that the spindle motor is isolated from the atmosphere during operation of the hard disk drive.

3. A hard disk drive as defined in any one of claims 1 and 2, wherein the interior of the closed casing that is isolated from the atmosphere is decompressed.

4. A hard disk drive as defined in claim 3, wherein a pressure of the decompressed interior of the closed casing ranges from about 0.9 atm. to about 0.5 atm..

5. A hard disk drive as defined in claim 3 or claim 4, wherein the pressure in the decompressed interior of the closed casing is about 0.7 atm..

6. A hard disk drive as defined in any one of claims 1 to 5, wherein another gas is substituted for air in the interior of the closed casing that is sealed and then isolated from the atmosphere.

7. A hard disk drive as defined in claim 6, wherein the gas substituted for the air is an inert gas.

8. A hard disk drive as defined in claim 6 or claim 7, wherein the gas substituted for the air is a gas with a reduced friction resistance.

9. A hard disk drive as defined in claim 6 or claim 8 as appended thereto, wherein the gas substituted for the air is a nitrogen gas.

10. A hard disk drive as defined in any one of claims 1 to 9, wherein the air or the gas filled in the closed casing for isolating the interior of the housing from the atmosphere is dehumidified.

11. A hard disk drive as defined in claim 10, wherein a vapor pressure contained in the dehumidified air or gas in the closed casing is about 0.1 atm. or less when the atmospheric pressure is 1 atm..

12. A hard disk drive as defined in claim 10 or claim 11, wherein a vapor pressure contained in the dehumidified air or gas in the closed casing is about 0.05 atm. or less, preferably about 0.005 atm. or less when the atmospheric pressure is 1 atm..

13. A hard disk drive as defined in any one of claims 1 to 12, wherein at least a part of the closed casing isolating the air is made from an elastic member.

14. A hard disk drive as defined in claim 13, wherein the elastic material member is a bellows.

15. A hard disk drive as defined in claim 13, wherein the elastic member is a plate made of an elastic material.

16. A hard disk drive as defined in any one of claims 1 to 15, wherein the spindle motor of the hard disk drive has a hydrodynamic gas bearing.

17. A hard disk drive as defined in claim 16, wherein among components of the hydrodynamic gas bearing, at least one of the components in contact with another when the spindle motor is de-energized is made of ceramic material

18. A method for driving a hard disk drive, comprising the step of:
driving storage media using a spindle motor, wherein among components of the hard disk drive, at least the spindle motor operates within an environment isolated from the atmosphere.

19. A method for driving a hard disk drive as defined in claim 18, wherein the isolated environment is either decompressed, dehumidified, dust-free, containing a gas substituted for air, or any combination thereof.
